# FASCICULE DE BREVET EUROPEEN

(11) **EP 2 789 888 B1**
(45) Date de publication et mention de la délivrance du brevet: **24.02.2016**
(21) Numéro de dépôt: 14162841.2
(22) Date de dépôt: 31.03.2014
(51) Int. Cl.: F16L 21/00, F16L 21/06

(54) **Dispositif de serrage pour l'accouplement étanche de tubes lisses**
Spannvorrichtung zum dichten Verbinden von Glattrohren
Clamping device for tight coupling of unprofiled tubes

(30) Priorité: 11.04.2013 FR 1353263
(43) Date de publication de la demande: 15.10.2014
(73) Titulaire: Etablissements CAILLAU, 92130 Issy-les-Moulineaux (FR)
(72) Inventeur: Prevot, Fabrice, 41130 Selles-sur-Cher (FR); Rigollet, Nicolas, 41200 Romorantin (FR); Fouqueray, Cyriaque, 41200 Romorantin (FR)
(74) Mandataire: Intès, Didier Gérard André

(56) Documents cités:
- EP-A2- 0 069 098
- GB-A- 2 229 245
- US-A- 4 049 298
- US-A1- 2003 015 872
- US-A1- 2011 210 546
- US-A1- 2012 018 999

## Description

La présente invention concerne un dispositif de serrage pour l'accouplement étanche de deux tubes lisses disposés bout à bout, le dispositif comprenant une bague d'étanchéité, apte à ceinturer les extrémités en regard des deux tubes et ayant une première et une deuxième extrémité libre présentant chacune un agencement d'étanchéité, les agencements d'étanchéité étant prévus pour assurer un contact étanche entre lesdites extrémités libres dans un état serré de la bague, le dispositif comprenant en outre une première et une deuxième oreille de serrage aptes à être déplacées l'une par rapport à l'autre pour amener la bague dans l'état serré.

Un tel dispositif est en général en métal.

Un dispositif de ce type est connu par la demande de brevet WO 00/75548. Dans ce dispositif connu, la bague d'étanchéité est disposée à l'intérieur d'un manchon sur lequel sont prévues des oreilles de serrage. Le manchon est relativement rigide et forme une forme de coque pour la bague qui est plus flexible, les agencements d'étanchéité prévus à ces extrémités libres sous la forme d'une languette et d'une encoche, se déformant lorsque ces extrémités viennent en contact pour assurer un contact étanche.

Ce dispositif donne satisfaction, mais il requiert une quantité importante de matériau, ce qui est pénalisant surtout pour des dispositifs de grand diamètre, par exemple à partir d'environ 200 mm de diamètre.

Le document US 4165109 divulgue également un dispositif de serrage pour l'accouplement étanche de deux tubes lisses, qui comprend une bague sur laquelle est fixé un ensemble de serrage comprenant une oreille en sablier et des boulons. Ici, la bague n'est pas entourée sur toute sa périphérie. Cependant, il ne s'agit pas d'une bague d'étanchéité dont les extrémités présenteraient des agencements d'étanchéité assurant un contact étanche entre les extrémités libres de la bague dans un état serré. En effet, lesdites extrémités libres ne viennent jamais en contact, mais un joint d'étanchéité déformable en caoutchouc ou analogue est disposé entre elles. De plus, la bague est plus rigide que l'oreille de serrage, une partie de la bande qui porte cette dernière devant s'aplatir lors du serrage pour que le joint d'étanchéité rapporté joue son rôle. Ainsi, ce dispositif utilise une quantité importante de matière puisqu'une bague épaisse doit entourer la quasi-intégralité du pourtour des tubes. Il a par ailleurs l'inconvénient de mettre en oeuvre un joint rapporté, réalisé dans un matériau de type caoutchouc, sujet à des usures prématurées.

L'invention vise à remédier aux inconvénients de l'art antérieur en proposant un dispositif de serrage pour l'accouplement de deux tubes lisses, dans lequel la quantité de matière première peut être réduite et dans lequel les extrémités de la bague d'étanchéité peuvent venir en contact étanche.

Ce but est atteint grâce au fait que la première et la deuxième oreille de serrage sont fixées sur la bague d'étanchéité, respectivement au voisinage de la première et de la deuxième extrémité libre de cette bague, et au fait que le dispositif comporte un pont recouvrant les agencements d'étanchéité, le pont étant monté fixe par rapport à la première extrémité libre de la bague et apte à coulisser par rapport à la deuxième extrémité libre lors du serrage de la bague.

Au sens du présent texte, les faces internes des différents éléments sont celles de leurs faces qui sont tournées vers l'axe géométrique de la bague, leurs faces externes étant les faces opposées. Le sens « vers l'avant » est celui du déplacement des oreilles lors du serrage, le sens « vers l'arrière » étant le sens inverse. Les bords latéraux sont les bords opposés, selon l'axe géométrique de la bague. Ainsi, les bords latéraux de la bague sont ceux qui s'étendent selon la circonférence de la bague, en étant séparés l'un de l'autre par la largeur de la bague.

La bague d'étanchéité est en général réalisée avec une faible épaisseur, pour remplir sa fonction d'étanchéité. Les oreilles, qui doivent être suffisamment rigides pour supporter les efforts de serrage, sont quant à elles fixées sur la bague. Ainsi, contrairement au cas du document WO 00/75548, l'invention fait l'économie d'un manchon, les oreilles étant directement fixées sur la bague. Le pont recouvre du côté externe les agencements d'étanchéité qui, de leur côté, assurent un contact étanche entre les extrémités de la bague. Dans la mesure où il est monté fixe par rapport à la première extrémité, le pont ne constitue pas un élément devant être manipulé séparément lors de la mise en place du dispositif et du serrage. Par ailleurs, son coulissement par rapport à la deuxième extrémité peut assurer l'homogénéité des efforts de serrage et un guidage de ce serrage.

Optionnellement, les agencements d'étanchéité des première et deuxième extrémités libres de la bague d'étanchéité comprennent respectivement au moins une languette et au moins une encoche, le serrage de la bague provoquant la pénétration de la languette dans l'encoche et la déformation de zones de contact entre la languette et l'encoche.

Les agencements d'étanchéité sont ainsi réalisés par des conformations simples des extrémités libres de la bague.

Optionnellement, les oreilles et la bague étant formées dans des bandes de métal, la bande dans laquelle est formée la bague présente une épaisseur comprise entre 30 % et 80 %, de préférence entre 40 % et 60% de l'épaisseur des bandes dans lesquelles sont formées les oreilles.

Les oreilles devant être rigides pour supporter les efforts de serrage, leur épaisseur est relativement importante. En revanche, l'épaisseur de la bague est nettement plus faible, ce qui assure une économie de matière très substantielle.

Optionnellement, le pont est également formé dans une bande de métal, dont l'épaisseur est sensiblement égale à l'épaisseur de la portion de bande dans laquelle est formée la bague.

Par exemple, le pont peut être réalisé à partir du même feuillard que celui dans lequel est réalisée la bague d'étanchéité. De manière générale, la notion d'épaisseur « sensiblement égale » recouvre le fait que l'épaisseur du pont peut être égale à celle de la bague d'étanchéité ou varier par rapport à cette dernière épaisseur dans une plage de l'ordre de 10 à 20 %.

Optionnellement, les oreilles sont formées dans des portions de bande, qui sont fixées sur la bague et recouvrent chacune cette dernière sur une plage angulaire de 10° à 50°, de préférence de 25° à 35°.

La longueur des portions de bande dans lesquelles sont formées les oreilles est choisie pour pouvoir assurer leur fixation à la bague d'étanchéité tout en permettant aux oreilles d'assurer leur fonction de serrage. La longueur de ces portions de métal est faible, la demanderesse ayant constaté que la plage angulaire de recouvrement précitée est suffisante. Si l'on cumule les longueurs des portions de bande, on obtient une plage angulaire totale de recouvrement de l'ordre de 20° à 100°, soit environ un quart de tour, ce qui est bien inférieur au cerclage complet du document WO 00/75548.

Optionnellement, au moins l'une des oreilles de serrage présente une paroi de serrage, qui est formée par un redressement de la portion de bande dans laquelle est formée cette oreille qui est configuré pour retenir un moyen de serrage, et une boucle dont l'extrémité est repliée entre ladite portion de bande et la bague.

Dans ce cas, selon une option de réalisation, à l'état non serré du dispositif, une partie de la face interne de l'extrémité de la boucle forme une surépaisseur radiale vers l'intérieur par rapport à la surface interne courante de la portion de bande, tandis que, à l'état serré du dispositif, ladite surépaisseur este résorbée. La « surface interne courante » de la portion de bande, est la celle qui est formée sur les parties de la bague qui sont rayonnées pour adopter la courbure de la bague d'étanchéité, abstraction faite d'aménagements particuliers de la surface interne de la portion de bande, tels qu'un renfoncement ou un soyage localisé.

On peut par exemple prévoir que l'extrémité repliée soit logée dans un renfoncement de la portion de bande dont la profondeur est sensiblement égale à l'épaisseur de l'extrémité repliée, et que l'un des éléments constitués par la face interne dudit renfoncement et par la face externe de l'extrémité de la boucle présente au moins un bossage d'appui coopérant avec l'autre desdits éléments.

Lors du serrage du dispositif, les oreilles ont tendance à basculer vers l'axe de la bague d'étanchéité. Du fait de ce basculement, les portions de bande dans lesquelles sont formées les oreilles s'écartent légèrement vers l'extérieur. Pour chaque oreille, la surépaisseur radiale initiale de la face interne de l'extrémité repliée (éventuellement réalisée à l'aide des bossages précités) compense cet écartement de telle sorte que, en situation serrée, la face interne de l'extrémité repliée reste sensiblement dans la continuité de la face interne courante de la portion de bande (abstraction faite du renfoncement dans lequel est reçue ladite extrémité repliée) pour procurer une continuité d'appui sur la face externe de la bague d'étanchéité et, en conséquence, éviter les fuites. De plus, l'extrémité de la boucle qui est repliée entre la portion de bande dans laquelle est formé le redressement et la bague constitue un support de réaction lorsque l'oreille tend à s'incliner vers l'axe, ce support de réaction limitant ainsi cette inclinaison.

Optionnellement, le dispositif comprend des moyens pour guider le coulissement du pont par rapport à la deuxième extrémité libre de la bague.

Par exemple, les bords de la bague présentent, au voisinage de la deuxième extrémité libre de cette dernière, des pattes coopérant avec les bords du pont.

Le serrage du dispositif s'opère ainsi de manière aisée, le pont restant aligné avec la bague selon leurs axes longitudinaux respectifs.

Optionnellement, le dispositif comporte au moins une paire de premières oreilles de serrage et une paire de deuxièmes oreilles de serrage situées en vis-à-vis, les deuxièmes oreilles étant formées dans deux portions de bande fixées sur la bague avec un espace entre elles.

Dans ce cas, selon une option de réalisation, le pont présente une patte de guidage qui s'étend dans ledit espace.

Le fait de former les oreilles de chaque paire dans des portions de bande distinctes permet de faire en sorte que les efforts de serrage soient prioritairement exercés autour de l'un seul des deux tubes, le plan de joint entre les deux tubes se trouvant au droit de l'espace entre les portions de bande qui portent les oreilles. Ainsi, si les diamètres des tubes sont légèrement différents, par exemple en raison des tolérances de fabrication, le serrage sur chaque tube est optimisé, optimisant ainsi l'étanchéité de l'ensemble. La patte de guidage du pont met à profit cet espace pour participer au guidage précité.

Optionnellement le dispositif comporte au moins une paire de premières oreilles de serrage et une paire de deuxièmes oreilles de serrage situées en vis-à-vis, ainsi que deux ensembles vis-écrou coopérant avec lesdites paires de premières et deuxièmes oreilles, et le dispositif comprend des moyens pour limiter un déplacement longitudinal de l'un des ensembles vis-écrou pendant le serrage de l'autre ensemble vis-écrou.

Par exemple, les écrous étant destinés à être retenus par les oreilles de l'une des paires, ces oreilles sont formées dans deux portions de bande fixées sur la bague avec un espace entre elles, et le pont présente une patte de retenue, qui est redressée dans ledit espace et avec laquelle au moins l'un des écrous est apte à venir en butée du côté opposé aux oreilles.

Ainsi, lorsque l'un des ensembles vis-écrou est vissé, provoquant ainsi l'avancement de la tige de la vis dans l'écrou, l'écrou de l'autre ensemble vis-écrou reste à peu près à sa place initiale, évitant l'avancement de cet ensemble vis-écrou pour accompagner l'avancement de la tige de l'autre ensemble. Il en résulte que, après le vissage du premier ensemble vis-écrou, l'autre ensemble vis-écrou reste dans sa position initiale, aisément accessible pour être vissé à son tour.

L'invention sera bien comprise et ses avantages apparaîtront mieux, à la lecture de la description détaillée qui suit, d'un mode de réalisation représenté à titre d'exemples non limitatifs. La description se réfère aux dessins annexés, sur lesquels :
- la figure 1 est une vue en perspective d'un dispositif de serrage selon l'invention, à l'état non serré ;
- les figures 2 et 3 sont des agrandissements des zones II et III de la figure 1 ;
- la figure 4 est une section dans le plan IV-IV de la figure 1 ;
- la figure 5 est une vue en perspective du dispositif de la figure 1, prise sous un angle différent montrant la face interne de la bague dans la région de ses extrémités libres ;
- la figure 6 est une vue en perspective partielle montrant la bague d'étanchéité dans la région de ses extrémités libres ;
- la figure 7 est une vue en perspective montrant le pont ;
- la figure 8 est une vue en perspective prise de dessous, montrant une oreille de serrage portée par une portion de bande, vue depuis l'intérieur de cette portion ;
- la figure 9 est une vue analogue à la figure 8, mais qui est prise depuis l'extérieur de la portion de bande ;
- la figure 10 est une section dans le plan X-X de la figure 8 ;
- la figure 11 est une vue analogue à la figure 1, mais montrant le dispositif au cours de son serrage ;
- la figure 12 est une vue partielle en perspective montrant la situation des extrémités libres de la bague d'étanchéité lorsque le dispositif est serré ; et
- la figure 13 est une vue de dessus montrant le dispositif à l'état serré, autour de deux tubes qu'il sert à raccorder.

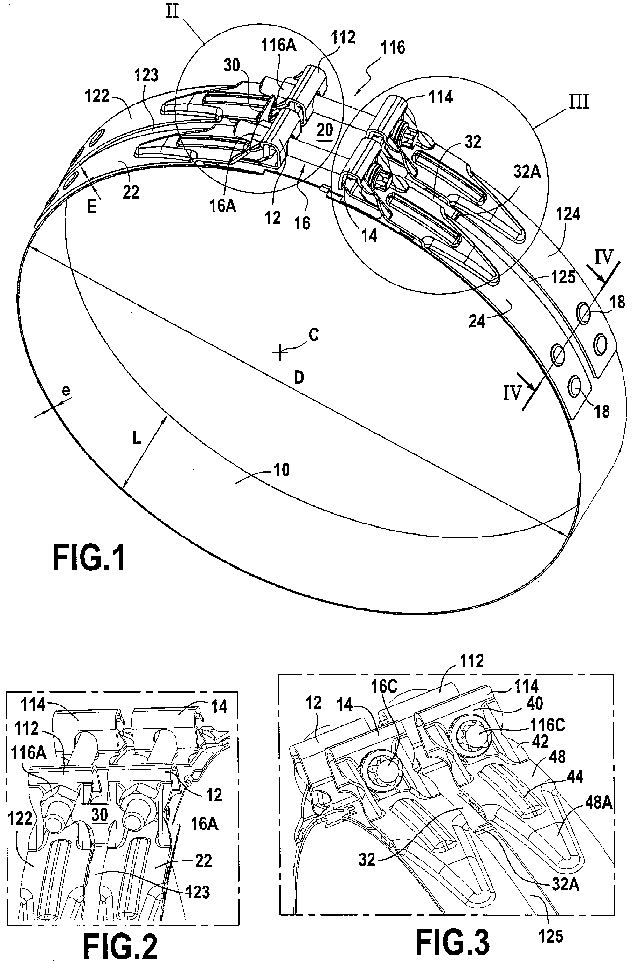

Comme on le voit sur la figure 1, le dispositif de serrage comprend une bague d'étanchéité 10 sur laquelle sont fixées des oreilles de serrage. En l'espèce, ces oreilles comprennent une paire de premières oreilles de serrage 12, 112, une paire de deuxièmes oreilles de serrage 14, 114, les première et deuxième oreilles de chaque paire étant situées en regard. Pour le serrage du dispositif, la première et la deuxième oreille en regard sont déplacées l'une par rapport à l'autre (en l'espèce, dans le sens d'un rapprochement) par un ensemble de serrage. En l'espèce, deux ensembles de serrage 16, 116 sont prévus, respectivement pour les oreilles 12, 14 en vis-à-vis et pour les oreilles 112, 114 en vis-à-vis. Ces moyens de serrage sont en l'occurrence du type vis-écrou.

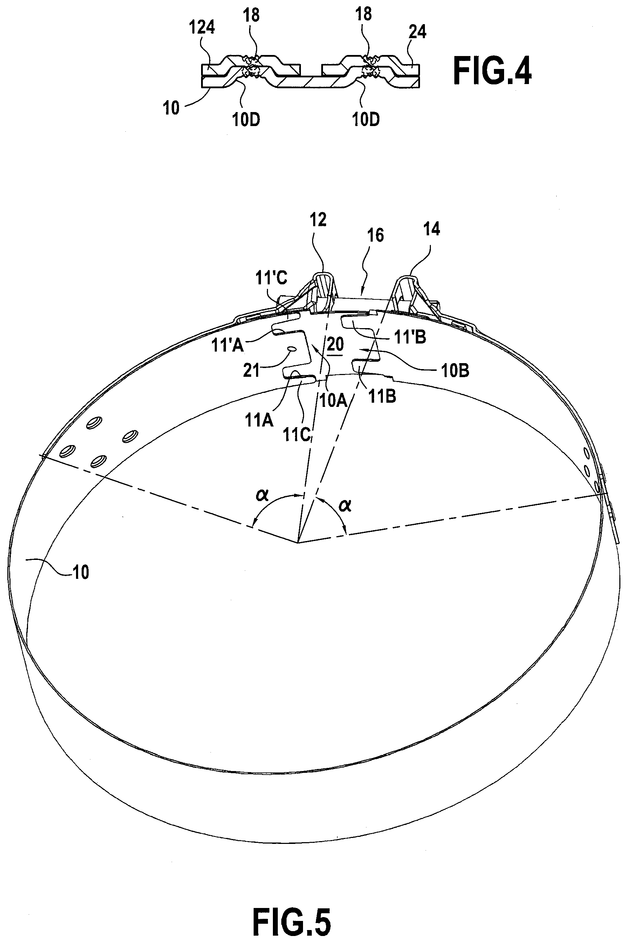

En l'espèce, chaque oreille de serrage est portée par une portion de bande. On distingue ainsi les portions de bande 22, 122 qui portent respectivement les premières oreilles 12, 112, et les portions de bande 24, 124 qui portent respectivement les deuxièmes oreilles 14, 114. Les portions de bande sont fixées à la bague d'étanchéité 10 en des points de fixation 18, en l'espèce, des soudures. Plus précisément, les portions de bande dans lesquelles sont formées les oreilles sont soudées à la bague d'étanchéité 10 dans des zones de la bague qui forment des cuvettes sur la face interne de cette bague. Ceci est mieux visible sur la figure 4, où l'on voit les cuvettes 10D. Ainsi, les éventuelles boursouflures liées à la soudure restent confinées dans la cuvette, sans affecter la géométrie de la périphérie interne de la bague 10, et donc sans affecter la qualité de son contact avec les tubes. Alternativement, les points de fixation pourraient être réalisés par rivetage, clinchage ou sertissage. Quel que soit le mode de fixation choisi, on prévoit avantageusement de fixer les portions de bande à la bague dans des zones de cette bague qui forment des cuvettes sur la face interne de la bague, comme il vient d'être décrit en relation avec des soudures. Ainsi, le contact entre la bague et les tubes n'est pas dégradé : si la fixation des portions de bande à la bague impacte la géométrie interne de cette dernière, cet impact est limité au fond des cuvettes.

Comme on le voit sur la figure 5, la première extrémité libre 10A et la deuxième extrémité libre 10B de la bague d'étanchéité 10 présentent chacune un agencement d'étanchéité. En l'espèce, ces agencements comprennent respectivement au moins une languette et au moins une encoche, le serrage de la bague provoquant la pénétration de la languette dans l'encoche et la déformation de zones de contact entre la languette et l'encoche. Ainsi, l'étanchéité s'opère de la manière indiquée dans le document WO 00/75548.

En l'espèce, on voit que la première extrémité 10A de la bague 10 présente deux encoches, respectivement 11A et 11'A, tandis que la deuxième extrémité 10B présente deux languettes, respectivement 11B et 11'B. Comme indiqué dans le document WO 00/75548, les languettes sont très légèrement trop larges pour les encoches, de sorte que la pénétration des languettes dans les encoches présente des déformations des zones en contact, ce qui assure l'étanchéité. A cet égard, les encoches 11A et 11'A sont bordées, du côté latéral externe, par des pattes, respectivement 11C et 11'C, qui peuvent être légèrement flexibles.

Comme dans le document WO 00/75548, la largeur des languettes peut diminuer en allant vers leurs extrémités libres, de même que la largeur des encoches peut diminuer en allant vers leurs fonds.

Il faut ici relever que, pour assurer sa fonction d'étanchéité, la bague d'étanchéité est réalisée dans une bande de métal particulièrement fine. Ceci favorise ces légères déformations nécessaires à assurer l'étanchéité, qu'il s'agisse d'épouser les contours extérieurs des tubes serrés à l'aide du dispositif ou bien qu'il s'agisse d'assurer la déformation des zones de contact entre les languettes et les encoches précitées.

On voit en particulier sur les figures 1 et 4 que le dispositif comporte un pont 20 qui recouvre les agencements d'étanchéité. Ce pont est disposé entre la périphérie externe de la bague 10 et les oreilles de serrage. Ainsi, lorsque le système est en place et serré autour des extrémités des tubes qu'il sert à raccorder, le plan de joint entre ces tubes étant situé vers le milieu de la largeur de la bague 10, l'étanchéité radiale est assurée par la présence du pont 20, tandis que l'étanchéité latérale est assurée par la coopération entre les agencements d'étanchéité décrits précédemment.

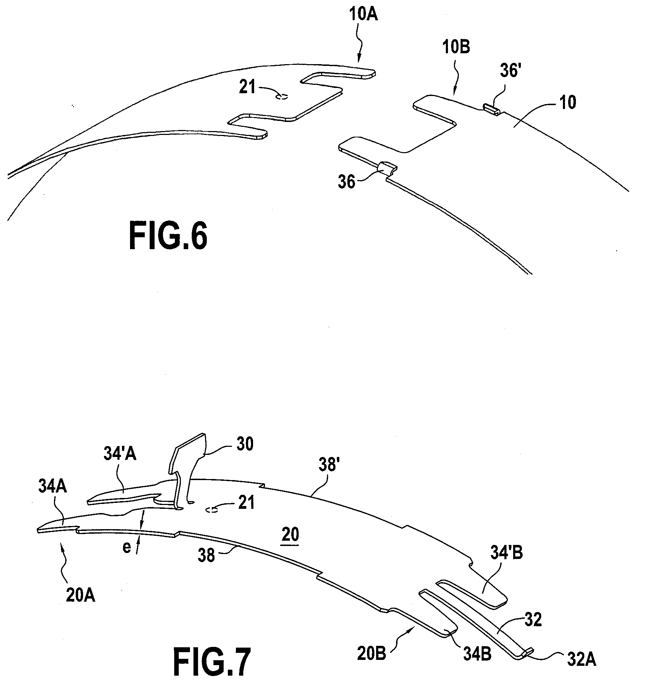

En se référant aux figures 6 et 7, on comprend mieux la structure du pont et son assemblage sur la bague d'étanchéité. Comme on le voit sur la figure 7, le pont a la forme d'une plaquette de métal, qui est rayonnée pour que son rayon de courbure corresponde sensiblement au rayon de courbure initial de la bague. Le pont est destiné à être fixé à la première extrémité 10A de la bague, et on a représenté sur les figures 6 et 7 la position du point de fixation 21, également visible sur la figure 5. Cette fixation s'opère en particulier par soudure. Dans la mesure où le pont et la bague sont de faible épaisseur et où le point de soudure 21, contrairement aux points de soudure 18 des oreilles sur la bague, est soumis à peu d'efforts de traction, il n'est pas nécessaire que ce point de soudure 21 soit aussi résistant que les points de soudure 18. Ainsi, il n'est pas nécessaire de réaliser le point de soudure 21 dans des cuvettes, car la soudure est suffisamment peu importante pour ne pas affecter la géométrie interne de la bague 10. De même, le point de soudure 21 peut être remplacé par un autre moyen de fixation, par exemple du type faisant appel à un clinchage, à un rivetage, ou à un sertissage. On peut par exemple réaliser la fixation du pont à l'aide de pattes latérales de la bague, pénétrant dans des encoches prévues à cet effet sur les bords latéraux du pont, et rabattues contre la face externe du pont.

On voit sur la figure 7 que, vers sa première extrémité 20A, le pont 20 présente une patte redressée 30. On comprend que cette patte est réalisée par découpe dans la première extrémité 20A, puis pliage pour être redressée. On voit également que, de part et d'autre de la découpe centrale dans laquelle est réalisée la patte 30, la première extrémité 20A du pont présente deux prolongements en forme de languettes, respectivement 34A et 34'A. Lorsque le pont est assemblé, ces languettes se positionnent respectivement sous les portions de bande 22 et 122 dans lesquelles sont formées les premières oreilles 12 et 112.

De même, la deuxième extrémité 20B du pont 20 présente deux prolongements en forme de languette, respectivement 34B et 34'B, qui, lorsque le pont est monté, sont situés sous les portions de bande 24 et 124 qui portent les oreilles 14 et 114. Entre ces deux languettes 34B et 34'B, le pont présente une patte de guidage 32 qui le prolonge selon sa circonférence, dont l'extrémité libre 32A est relevée. La fonction des pattes 30 et 32 sera exposée dans la suite.

En se reportant à la figure 6, on voit que les bords latéraux de la bague 10 présentent des pattes 36, 36', situées au voisinage de la deuxième extrémité libre 10B de la bague. Ces pattes sont destinées à coopérer avec les bords latéraux du pont 20 pour assurer son guidage lors de son coulissement par rapport à la deuxième extrémité 10B de la bague 10. En l'espèce, les bords latéraux du pont présentent des encoches 38, 38' correspondant à une réduction de la largeur de ce pont. Ainsi, les pattes 36, 36' peuvent coopérer avec les fonds des encoches 38 et 38' sans déplacer latéralement vers l'extérieur. Par ailleurs, sur la figure 6, les pattes 36 et 36' sont repliées de manière à recouvrir légèrement radialement les bords du pont 20 (ou les fonds des encoches). Ceci favorise le maintien en position du pont en s'opposant à son débattement radial.

Pour monter le pont sur la bague, on le place de telle sorte qu'il recouvre les extrémités de la bague et que la soudure 21 puisse être effectuée. Les pattes 36 et 36' sont repliées après la mise en place du pont.

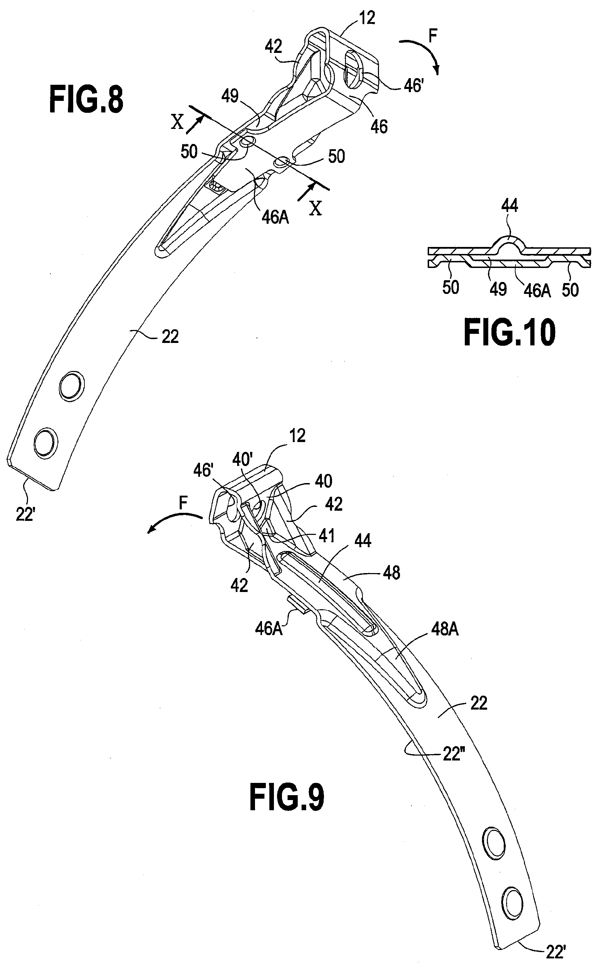

En référence aux figures 8 à 10, on décrit maintenant la conformation des oreilles de serrage. Sur ces figures, on a pris l'exemple de la première oreille de serrage 12, sachant que, dans l'exemple représenté, toutes les oreilles de serrage sont analogues.

L'oreille de serrage 12 est formée dans une portion de bande 22 dont la courbure est adaptée au rayon de courbure de la bague d'étanchéité 10. L'oreille est formée à l'extrémité avant de cette portion de bande. On voit sur la figure 9 que l'oreille de serrage 12 présente une paroi de serrage 40 qui est formée par un redressement de la portion de bande dans laquelle cette oreille est formée. Ce redressement 40 est donc configuré pour retenir un moyen de serrage (écrou ou tête de vis). A son extrémité avant, opposée à l'extrémité arrière 22' de la portion de bande 22, l'oreille 12 présente une boucle 46 dont l'extrémité 46A est repliée sous la portion de bande 22. Ainsi, lorsque la portion de bande 22 est en place sur la bague 10, cette extrémité 46A est repliée entre cette portion de bande et la bague. La paroi de serrage 40 et la boucle 46 présentent des perçages, respectivement 40' et 46' qui sont alignés, pour recevoir le fût d'une vis de serrage ou analogue (tirant axial, goujon ...). On voit que le perçage 46' est oblong, la boucle 46 ayant tendance à légèrement s'incliner lors du serrage.

Globalement, la conformation de l'oreille de serrage est analogue à ce que décrit le document FR 2 902 175. En effet, en l'occurrence, la paroi de serrage 40 est formée dans un embouti de la portion de bande 22, les bords 42 de cet embouti formant ainsi des nervures de rigidification, de part et d'autre de la paroi de serrage. Vues de côté, ces nervures ont ainsi sensiblement une forme en équerre.

De manière générale, l'oreille présente des emboutis ou des nervures pour renforcer la rigidité des portions de bande et, en particulier, celle des oreilles. On a déjà évoqué l'embouti dans lequel est réalisée la paroi de serrage 40. On remarque également une nervure emboutie 44, en saillie sur la face externe de la portion de bande 22, cette nervure étant située juste derrière l'oreille dans le sens allant vers l'extrémité libre opposée 22' de la portion de bande.

Par ailleurs, cette portion de bande 22 présente un embouti 48 qui, sur la face interne de ladite portion de bande, forme un renfoncement 49 (voir figure 8) pour recevoir l'épaisseur de l'extrémité repliée 46A de la boucle 46. Ainsi, la face interne de cette extrémité repliée s'étend dans la continuité de la face interne du reste de la portion de bande 22.

L'embouti 48 présente une première partie, située du côté de l'oreille 40, qui s'étend sensiblement sur toute la largeur de la portion de bande, pour recevoir la largeur de l'extrémité repliée 46A. En allant vers l'extrémité libre 22' de la portion de bande 22, l'embouti 48 présente une partie d'extrémité 48A qui va en s'effilant vers l'extrémité libre 22' de la portion de bande. On constate sur la figure 8 que la longueur de l'extrémité repliée 46A est inférieure à celle de l'embouti 48, de sorte que l'extrémité repliée 46A ne parvient pas jusqu'à l'extrémité 48A de l'embouti. En réalité, par souci d'économie de matière, on évite de réaliser l'extrémité repliée avec une longueur trop grande. Cependant, on prolonge volontairement l'embouti 48 sur sa portion d'extrémité 48A. Ceci permet de rigidifier la portion de bande au-delà de l'extrémité libre 46A, et donc à distance de l'oreille 12. Lors du serrage, sous l'effet des efforts de traction exercés sur le tirant ou le fût vissé de la vis, les oreilles ont tendance à basculer vers le centre de la bague de serrage, comme indiqué par les flèches F. L'extrémité repliée 46A de la boucle 46 exerce alors un effort de réaction contre la face interne de l'embouti 48 pour s'opposer à un basculement excessif des oreilles. Le prolongement 48A de l'embouti rigidifie la portion de bande 22 de manière à favoriser l'intensité des efforts de réaction.

Par ailleurs, comme on le voit sur les figures 8 et 10, la face externe de l'extrémité 46A de la boucle 46 présente des bossages d'appui 50 qui coopèrent avec la face interne de la portion de bande 22. On pourrait imaginer une disposition inverse, avec des bossages formés sur la face interne de la portion de bande 22, pour coopérer avec la face externe de l'extrémité repliée 46A. Comme on le voit sur la figure 10, ces bossages 50 maintiennent localement une légère distance entre le fond du renfoncement 49 et le reste de la face externe de l'extrémité 46A. En fait, la profondeur de la cuvette 49, mesurée radialement, est égale ou sensiblement égale à l'épaisseur de l'extrémité repliée 46A. De ce fait, comme on le voit sur la figure 9, la face interne de l'extrémité repliée 46A se trouve ainsi en légère surépaisseur par rapport à la partie courante 22" de la face interne de la portion de bande 22. Lorsque l'oreille 12 a tendance à basculer sous l'effet des efforts de traction exercés lors du serrage, le tronçon de la portion de bande 22 situé immédiatement à l'arrière de l'oreille a tendance à s'éloigner de l'axe géométrique de la portion de bande (qui, quand la portion de bande est fixée sur la bague 10, est l'axe géométrique C de la bague). L'amplitude de cet éloignement correspond à la hauteur radiale des bossages 50 de sorte que, malgré cet éloignement, la face interne de l'extrémité repliée 46A reste sur le rayon souhaité, et assure une continuité d'appui sur la surface du tube entourée par la bague.

Comme indiqué précédemment, le pont 20 présente des prolongements en forme de languettes 34A, 34'A, 34B et 34'B qui s'étendent sous les portions de bande qui portent les oreilles. En fait, ces prolongements en forme de languettes s'étendent, pendant le serrage, sous les extrémités repliées 46A des oreilles ou sous les régions des portions de bandes 22, 122, 24 et 124 situées à l'arrière de ces extrémités repliées. Ainsi, dans régions soumises à des contraintes de basculement, exercent les efforts de réaction au basculement sur des zones dans lesquelles l'épaisseur des prolongements en forme de languettes s'ajoute à celle de la bague 10, la capacité de ces zones à supporter de tels efforts est donc augmentée.

Les portions de bande dans lesquelles sont formées les oreilles ne constituent pas un cerclage de la bague d'étanchéité. En effet, ces portions ne recouvrent la bague que sur une plage angulaire relativement faible. Comme on le voit en particulier sur la figure 5, la plage angulaire α de recouvrement entre les portions de bande et la bague d'étanchéité est de l'ordre de 10 à 50°, de préférence de l'ordre de 25 à 35°.

Les oreilles et les portions de bande qui les portent sont soumises à des contraintes importantes lors du serrage du dispositif. Il convient donc que ces oreilles et ces portions de bande présentent la rigidité et la résistance aux efforts suffisantes, ce pourquoi sont prévus les emboutis précédemment cités, et ce pourquoi l'épaisseur des portions de bande doit être suffisamment importante. En revanche, comme indiqué précédemment, la bague d'étanchéité doit pouvoir être légèrement déformée pour assurer sa fonction d'étanchéité. Il convient donc qu'elle ait quant à elle une épaisseur limitée. En faisant en sorte que les portions de bande ne soient en recouvrement angulaire que sur des angles relativement faibles avec la bague d'étanchéité, on économise une quantité très substantielle de matière, par rapport à ce que divulgue le document WO 00/75548.

Par exemple, l'épaisseur e de la bague est comprise entre 30 % et 80 %, de préférence entre 40 % et 60 % de l'épaisseur E des portions de bande dans lesquelles sont formées les oreilles.

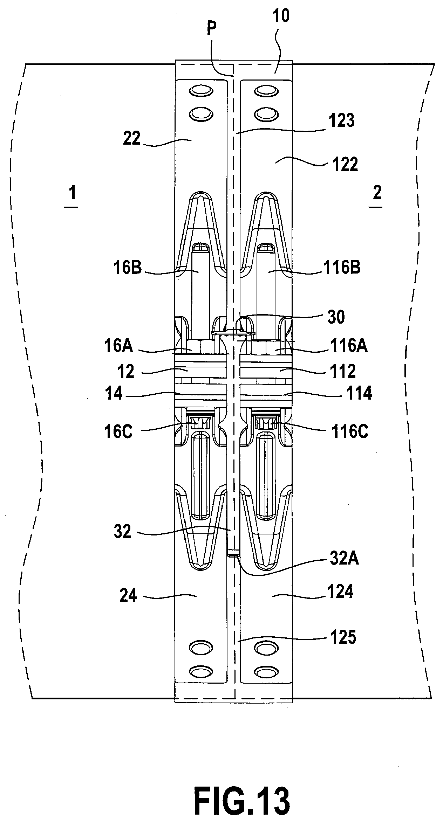

La largeur L de la bague d'étanchéité 10 est prévue pour recouvrir la longueur suffisante des extrémités des tubes assemblés à l'aide du dispositif, comme indiqué sur la figure 13.

L'invention trouve en particulier son application dans des dispositifs de serrage de diamètre relativement important, le diamètre D de la bague d'étanchéité étant par exemple compris entre 200 et 400 mm, et plus particulièrement entre 250 et 350 mm. L'épaisseur e de la bague d'étanchéité est par exemple comprise entre 1/400ème et 1/200ème du diamètre D de cette bague.

L'épaisseur e du pont 20 est égale à l'épaisseur e de la bague 10, ces deux éléments pouvant être réalisés à partir d'un même feuillard.

Le dispositif de serrage selon l'invention pourrait ne comporter qu'une première oreille et une deuxième oreille située en vis-à-vis et déplacées l'une par rapport à l'autre par tout moyen de serrage approprié. En l'occurrence, ainsi qu'il a été indiqué, le diamètre D de sa bague est assez important, sa largeur L, mesurée parallèlement à l'axe C de la bague, étant elle-même assez importante, par exemple de l'ordre de 45 à 70 mm, en particulier de l'ordre de 50 à 60 mm.

En conséquence, comme dans l'exemple représenté, il est intéressant de disposer de plusieurs premières oreilles et de plusieurs deuxièmes oreilles, en particulier deux premières oreilles et deux deuxièmes oreilles.

Par ailleurs, souhaitant équiper le dispositif de serrage de deux premières oreilles et de deux deuxièmes oreilles, on pourrait réaliser les premières oreilles dans une même portion de bande de largeur sensiblement analogue à celle de la bague, et procéder de la même manière pour les deuxièmes oreilles.

Cependant, dans le dispositif représenté à titre d'exemple, chaque oreille est réalisée dans une portion de bande spécifique. De plus, les deux portions de bande dans lesquelles sont réalisées les premières oreilles 12 et 112 sont fixées sur la bague 10 en ménageant un espace 123 entre elles. De même, les deux portions de bande 24, 124 dans lesquelles sont formées les oreilles 14, 114 sont fixées sur la bague en ménageant un espace 125 entre elles. D'une part, on économise ainsi du matériau, puisque la largeur des portions de bande est limitée au strict nécessaire pour que les oreilles assurent leur fonction. D'autre part, on met à profit les espaces 123 et 125 pour différentes fonctions.

En effet, la patte de guidage 32 du pont 20 s'étend dans l'espace 125, comme on le voit en particulier sur les figures 1, 11 et 13. Dans la mesure où les bords latéraux en regard des portions de bande 24 et 124 sont chacun dans un plan perpendiculaire à l'axe de la bague 10, ces bords sont parallèles et constituent donc des bords de guidage pour la patte 32. Du fait que l'extrémité libre 32A de cette patte soit relevée favorise son contact avec les bords latéraux internes des portions de bande 24 et 124, sans risque que cette patte ne vienne se coincer entre ces portions de bande et la bague.

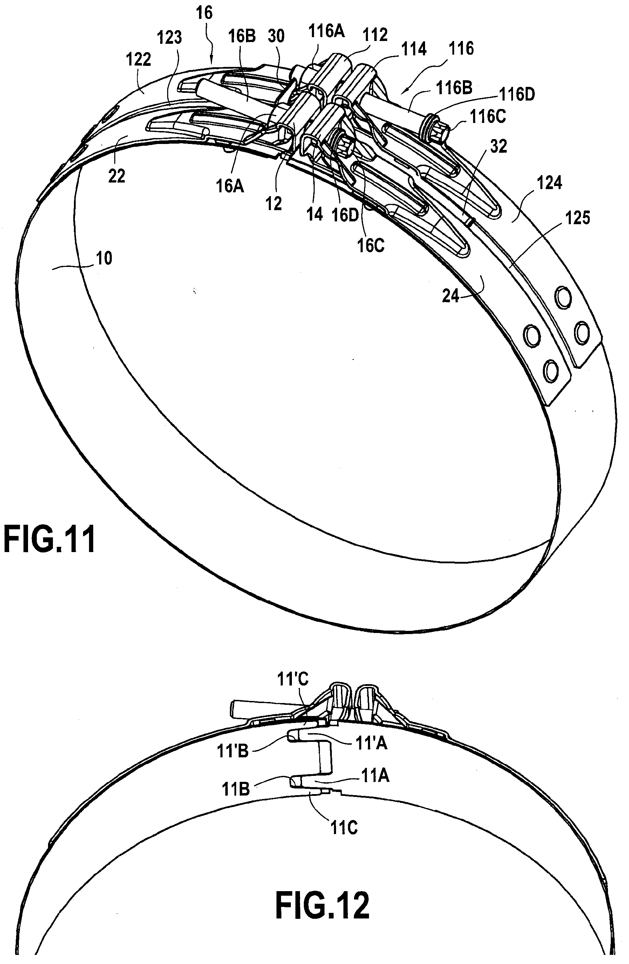

Par ailleurs, comme on le voit sur la figure 11, les deux ensembles de serrage 16 et 116 ne sont pas nécessairement serrés simultanément. En l'occurrence, sur la figure 11, le premier ensemble de serrage 16 a été serré, tandis que le deuxième ensemble de serrage 116 est encore desserré.

Ainsi qu'il a été indiqué, chaque ensemble de serrage peut être du type vis-écrou. Ainsi, les ensembles de serrage 16 et 116 comprennent chacun un écrou, respectivement 16A et 116A, en appui contre les premières oreilles 12 et 112, et une vis dont la tige, respectivement 16B et 116B, traversent les perçages des oreilles, et dont la tête, respectivement 16C et 116C, est retenue contre une deuxième oreille 14, 114. Comme on le voit sur la figure 9, les premières oreilles 12 et 112 peuvent présenter des agencements anti-rotation pour empêcher la rotation des écrous 16A et 116A. Par exemple, les écrous ont plusieurs méplats, et le fond des emboutis dans lesquels sont formés les parois de serrage présentent également des méplats 41 comme indiqué sur la figure 9. Ceci peut d'ailleurs constituer une différence entre les premières et les deuxièmes oreilles, qui sont par ailleurs analogues. Cependant, selon la conformation des têtes 16C et 116C des vis ou la présence d'éventuelles rondelles d'entretoisement 16D, 116D entre ces têtes de vis et les deuxièmes oreilles, les méplats analogues aux méplats 41 peuvent équiper ces deuxièmes oreilles sans empêcher la rotation des têtes de vis.

Par ailleurs, il convient d'empêcher que les écrous n'aient tendance à reculer en s'éloignant des parois de serrage des premières oreilles 12 et 112 lors du serrage des ensembles de serrage 16 et 116. C'est à cela que sert la patte de retenue 30. On voit en effet, en particulier sur les figures 1, 11 et 13, que cette patte 30 est redressée dans l'espace 123, et que ses ailes (la patte a une forme en T ainsi qu'on le voit sur la figure 7) s'étendent respectivement derrière les écrous 16A et 116A, c'est-à-dire du côté de ces écrous opposé aux premières oreilles 12 et 112. Ainsi, les ailes de la patte 30 forment des butées s'opposant au recul des écrous lors du serrage. Si on se reporte à la figure 11, on voit que l'écrou 16A a ainsi pu rester en place lors du serrage du premier ensemble de serrage. Dans la mesure où, de son côté, le deuxième ensemble de serrage n'a pas encore été sollicité, il existe un risque que le fût 116B de la vis de cet ensemble ait tendance à être retenue par la première oreille 114, en avançant en même temps que le fût de la vis de l'autre ensemble 16 était vissé. Dans ce cas, la tête 116C de la vis du deuxième ensemble de serrage aurait été peu accessible à l'outil de serrage. La patte 30 a donc évité ce mouvement d'accompagnement du rapprochement des oreilles.

Bien entendu, on pourrait obtenir la même fonction de retenue des écrous à l'aide de deux pattes, soit une patte par écrou.

Sur la figure 13, on voit le dispositif serré sur les extrémités de deux tubes 1 et 2. Le plan de joint P entre ces deux tubes est situé dans la région médiane de la largeur du dispositif, et est représenté par un trait interrompu P. A l'appui de cette figure, on comprendra un autre intérêt de l'utilisation de portion de bande spécifique portant chacune une oreille. En effet, le plan de joint P est situé dans une zone du dispositif correspondant aux espaces 123, 125 entre les portions de bande. Ainsi, les portions de bande 22 et 24 d'une part, et 122 et 124 d'autre part servent au serrage du dispositif respectivement sur le tube 1 et sur le tube 2. En conséquence, si ces tubes présentent de légères disparités de diamètre, le serrage doit être optimisé sur chaque tube.

Le dispositif est par exemple réalisé en acier inoxydable recuit. Il peut s'agir d'un inox austénitique ou d'un inox ferritique, moins coûteux. Par exemple, les portions de bandes qui portent les oreilles sont en inox ferritique 1.4509, tandis que la bague d'étanchéité et le pont sont en inox ferritique 1.4016.

## Revendications

1. Dispositif de serrage pour l'accouplement étanche de deux tubes lisses disposés bout à bout, le dispositif comprenant une bague d'étanchéité (10), apte à ceinturer les extrémités en regard des deux tubes et ayant une première et une deuxième extrémité libre (10A, 10B) présentant chacune un agencement d'étanchéité (11A, 11'A, 11B, 11'B, 11C, 11'C), les agencements d'étanchéité étant prévus pour assurer un contact étanche entre lesdites extrémités libres dans un état serré de la bague (10), le dispositif comprenant en outre une première et une deuxième oreille de serrage (12, 112 ; 14, 114) aptes à être déplacées l'une par rapport à l'autre pour amener la bague dans l'état serré,
**caractérisé en ce que** la première et la deuxième oreille de serrage (12, 112 ; 14, 114) sont fixées sur la bague d'étanchéité (10), respectivement au voisinage de la première et de la deuxième extrémité libre (10A, 10B) de cette bague, et **en ce que** le dispositif comporte un pont (20) recouvrant les agencements d'étanchéité (11A, 11'A, 11B, 11'B, 11C, 11'C) le pont étant monté fixe par rapport à la première extrémité libre (10A) de la bague (10) et apte à coulisser par rapport à la deuxième extrémité libre (10B) lors du serrage de la bague.

2. Dispositif selon la revendication 1, **caractérisé en ce que** les agencements d'étanchéité des première et deuxième extrémités libres (10A, 10B) de la bague d'étanchéité (10) comprennent respectivement au moins une languette (11B, 11'B) et au moins une encoche (11A, 11'A), le serrage de la bague provoquant la pénétration de la languette dans l'encoche et la déformation de zones de contact entre la languette et l'encoche.

3. Dispositif selon la revendication 1 ou 2, **caractérisé en ce que**, les oreilles (12, 14, 112, 114) et la bague (10) étant formées dans des bandes de métal, la bande dans laquelle est formée la bague présente une épaisseur (e) comprise entre 30 % et 80 %, de préférence entre 40 % et 60 % de l'épaisseur (E) des bandes dans lesquelles sont formées les oreilles (12, 14, 112, 114).

4. Dispositif selon la revendication 3, **caractérisé en ce que** le pont (20) est également formé dans une bande de métal, dont l'épaisseur (e) est sensiblement égale à l'épaisseur (e) de la bande dans laquelle est formée la bague (10).

5. Dispositif selon l'une quelconque des revendications 1 à 4, **caractérisé en ce que** les oreilles (12, 112 ; 14, 114) sont formées dans des portions de bande (22, 122 ; 24, 124), qui sont fixées sur la bague (10) et recouvrent chacune cette dernière sur une plage angulaire de 10° à 50°, de préférence de 25° à 35°.

6. Dispositif selon la revendication 5, **caractérisé en ce que** les portions de bande (22, 122, 24, 124) dans lesquelles sont formées les oreilles (12, 112 ; 14, 114) présentent des emboutis ou des nervures (44, 48) prévus pour renforcer la rigidité desdites portions de bande.

7. Dispositif selon la revendication 5 ou 6, **caractérisé en ce que** les portions de bande (22, 24 ; 122, 124) dans lesquelles sont formées les oreilles (12, 14 ; 112, 114) sont fixées à la bague dans des zones de la bague qui forment des cuvettes (10D) sur la face interne de la bague (10).

8. Dispositif selon l'une quelconque des revendications 5 à 7, **caractérisé en ce que** au moins l'une des oreilles de serrage (12, 14, 112, 114) présente une paroi de serrage (40), qui est formée par un redressement de la portion de bande (22, 24, 122, 124) dans laquelle est formée cette oreille qui est configuré pour retenir un moyen de serrage, et une boucle (46) dont l'extrémité (46A) est repliée entre ladite portion de bande et la bague (10).

9. Dispositif selon la revendication 8, **caractérisé en ce que**, à l'état non serré du dispositif, une partie de la face interne de l'extrémité (46A) de la boucle (46) forme une surépaisseur radiale vers l'intérieur par rapport à la surface interne courante (22") de la portion de bande (22), tandis que, à l'état serré du dispositif, ladite surépaisseur est résorbée.

10. Dispositif selon la revendication 8, **caractérisé en ce que** l'un des éléments constitués par la face interne de la portion de bande (22, 24, 122, 124) et par la face externe de l'extrémité (46A) de la boucle (46) présente au moins un bossage (50) d'appui coopérant avec l'autre desdits éléments.

11. Dispositif selon l'une quelconque des revendications 1 à 10, **caractérisé en ce qu'**il comprend des moyens (36, 36', 38, 38') pour guider le coulissement du pont (20) par rapport à la deuxième extrémité libre (10B) de la bague (10).

12. Dispositif selon la revendication 11, **caractérisé en ce que** les bords de la bague (10) présentent, au voisinage de sa deuxième extrémité libre (10B), des pattes (36, 36') coopérant avec les bords du pont (20).

13. Dispositif selon l'une quelconque des revendications 1 à 12, **caractérisé en ce qu'**il comporte au moins une paire de premières oreilles de serrage (12, 112) et une paire de deuxièmes oreilles de serrage (14, 114) situées en vis-à-vis, les deuxièmes oreilles étant formées dans deux portions de bande (24, 124) fixées sur la bague avec un espace (125) entre elles, et **en ce que** le pont (20) présente une patte de guidage (32) qui s'étend dans ledit espace.

14. Dispositif selon l'une quelconque des revendications 1 à 13, **caractérisé en ce qu'**il comporte au moins une paire de premières oreilles de serrage (12, 112) et une paire de deuxièmes oreilles de serrage (14, 114) situées en vis-à-vis, ainsi que deux ensembles vis-écrou (16, 116) coopérant avec lesdites paires de premières et deuxièmes oreilles, et **en ce qu'**il comprend des moyens (30) pour limiter un déplacement longitudinal de l'un des ensembles vis-écrou (16, 116) pendant le serrage de l'autre ensemble vis-écrou.

15. Dispositif selon la revendication 14, **caractérisé en ce que**, les écrous (16A, 116A) étant destinés à être retenus par les oreilles (12, 112) de l'une des paires, ces oreilles sont formées dans deux portions de bande (22, 122) fixées sur la bague avec un espace (123) entre elles, et **en ce que** le pont (20) présente une patte de retenue (30), qui est redressée dans ledit espace (123) et avec laquelle au moins l'un des écrous est apte à venir en butée du côté opposé aux oreilles.

## Patentansprüche

1. Klemmvorrichtung zum dichten Kuppeln von zwei aneinander angeordneten Glattrohren, wobei die Vorrichtung einen Dichtungsring (10) aufweist, der geeignet ist, die gegenüberliegenden Enden der beiden Rohre zu umfassen, und der ein erstes und ein zweites freies Ende (10A, 10B) hat, die jeweils eine Dichtungsanordnung (11A, 11'A, 11B, 11'B, 11C, 11'C) aufweisen, wobei die Dichtungsanordnungen vorgesehen sind, um einen dichten Kontakt zwischen den freien Enden in einem festgezogenen Zustand des Rings (10) sicherzustellen, wobei die Vorrichtung ferner eine erste und eine zweite Klemmschlaufe (12, 112; 14, 114) umfasst, die geeignet sind, zueinander bewegt zu werden, um den Ring in den festgezogenen Zustand zu bringen,
**dadurch gekennzeichnet, dass** die erste und die zweite Klemmschlaufe (12, 112; 14, 114) an dem Dichtungsring (10) in der Nähe des ersten bzw. des zweiten freien Endes (10A, 10B) dieses Rings befestigt sind und dass die Vorrichtung eine Brücke (20), welche die Dichtungsanordnungen (11A, 11'A, 11B, 11'B, 11C, 11'C) bedeckt, umfasst, wobei die Brücke gegenüber dem ersten freien Ende (10A) des Rings (10) fest angebracht und geeignet ist, sich beim Festziehen des Rings gegenüber dem zweiten freien Ende (10B) verschieben zu lassen.

2. Vorrichtung nach Anspruch 1, **dadurch gekennzeichnet, dass** die Dichtungsanordnungen des ersten und des zweiten freien Endes (10A, 10B) des Dichtungsrings (10) jeweils wenigstens eine Zunge (11 B, 11'B) und wenigstens eine Kerbe (11A, 11'A) umfassen, wobei das Festziehen des Rings das Eindringen der Zunge in die Kerbe und die Verformung von Kontaktbereichen zwischen der Zunge und der Kerbe bewirkt.

3. Vorrichtung nach Anspruch 1 oder 2, **dadurch gekennzeichnet, dass**, da die Schlaufen (12, 14, 112, 114) und der Ring (10) aus Metallbändern gebildet sind, das Band, aus dem der Ring gebildet ist, eine Dicke (e) zwischen 30 % und 80 %, vorzugsweise zwischen 40 % und 60 % der Dicke (E) der Bänder, aus denen die Schlaufen (12, 14, 112, 114) gebildet sind, aufweist.

4. Vorrichtung nach Anspruch 3, **dadurch gekennzeichnet, dass** die Brücke (20) ebenfalls aus einem Metallband gebildet ist, dessen Dicke (e) im Wesentlichen gleich der Dicke (e) des Bandes ist, aus dem der Ring (10) gebildet ist.

5. Vorrichtung nach einem der Ansprüche 1 bis 4, **dadurch gekennzeichnet, dass** die Schlaufen (12, 112; 14, 114) in Bandabschnitten (22, 122; 24, 124) ausgebildet sind, die an dem Ring (10) befestigt sind und jeweils letzteren über einen Winkelbereich von 10° bis 50°, vorzugsweise von 25° bis 35° bedecken.

6. Vorrichtung nach Anspruch 5, **dadurch gekennzeichnet, dass** die Bandabschnitte (22, 122, 24, 124), in denen die Schlaufen (12, 112; 14, 114) ausgebildet sind, Ausbauchungen oder Rippen (44, 48) aufweisen, die vorgesehen sind, um die Steifigkeit der Bandabschnitte zu verstärken.

7. Vorrichtung nach Anspruch 5 oder 6, **dadurch gekennzeichnet, dass** die Bandabschnitte (22, 24; 122, 124), in denen die Schlaufen (12, 14; 112, 114) ausgebildet sind, an dem Ring in Bereichen des Rings befestigt sind, die Mulden (10D) an der Innenseite des Rings (10) bilden.

8. Vorrichtung nach einem der Ansprüche 5 bis 7, **dadurch gekennzeichnet, dass** wenigstens eine der Klemmschlaufen (12, 14, 112, 114) eine Klemmwand (40), welche durch eine Aufrichtung des Bandabschnittes (22, 24, 122, 124), in dem diese Schlaufe ausgebildet ist, gebildet ist, welche dazu ausgelegt ist, ein Klemmmittel zu halten, sowie eine Spange (46) aufweist, deren Ende (46A) zwischen den Bandabschnitt und den Ring (10) umgebogen ist.

9. Vorrichtung nach Anspruch 8, **dadurch gekennzeichnet, dass** im nicht festgezogenen Zustand der Vorrichtung ein Teil der Innenseite des Endes (46A) der Spange (46) eine radiale Überdicke nach innen, bezogen auf die durchgehende Innenfläche (22") des Bandabschnittes (22), bildet, während im festgezogenen Zustand der Vorrichtung die Überdicke aufgenommen ist.

10. Vorrichtung nach Anspruch 8, **dadurch gekennzeichnet, dass** eines der Elemente, die durch die Innenseite des Bandabschnittes (22, 24, 122, 124) und durch die Außenseite des Endes (46A) der Spange (46) gebildet sind, wenigstens einen Anlagebuckel (50) aufweist, der mit dem anderen der Elemente zusammenwirkt.

11. Vorrichtung nach einem der Ansprüche 1 bis 10, **dadurch gekennzeichnet, dass** sie Mittel (36, 36', 38, 38'), um das Verschieben der Brücke (20) gegenüber dem zweiten freien Ende (10B) des Rings (10) zu führen, umfasst.

12. Vorrichtung nach Anspruch 11, **dadurch gekennzeichnet, dass** die Ränder des Rings (10) in der Nähe seines zweiten freien Endes (10B) Laschen (36, 36'), die mit den Rändern der Brücke (20) zusammenwirken, aufweist.

13. Vorrichtung nach einem der Ansprüche 1 bis 12, **dadurch gekennzeichnet, dass** sie wenigstens ein Paar von ersten Klemmschlaufen (12, 112) und ein Paar von gegenüberliegenden zweiten Klemmschlaufen (14, 114) umfasst, wobei die zweiten Schlaufen in zwei Bandabschnitten (24, 124), welche an dem Ring mit einem Raum (125) zwischen ihnen befestigt sind, ausgebildet sind, und dass die Brücke (20) eine Führungslasche (32), die sich in den Raum erstreckt, aufweist.

14. Vorrichtung nach einem der Ansprüche 1 bis 13, **dadurch gekennzeichnet, dass** sie wenigstens ein Paar von ersten Klemmschlaufen (12, 112) und ein Paar von gegenüberliegenden zweiten Klemmschlaufen (14, 114) sowie zwei Schraube-Mutter-Anordnungen (16, 116), die mit den Paaren von ersten und zweiten Schlaufen zusammenwirken, umfasst und dass sie Mittel (30) zum Begrenzen einer Längsbewegung von einer der Schraube-Mutter-Anordnungen (16, 116) während des Festziehens der anderen Schraube-Mutter-Anordnung umfasst.

15. Vorrichtung nach Anspruch 14, **dadurch gekennzeichnet, dass**, da die Muttern (16A, 116A) dazu bestimmt sind, durch die Schlaufen (12, 112) von einem der Paare festgehalten zu werden, diese Schlaufen in zwei Bandabschnitten (22, 122), die an dem Ring mit einem Raum (123) zwischen ihnen befestigt sind, ausgebildet sind, und dass die Brücke (20) eine Haltelasche (30) aufweist, die in dem Raum (123) aufgerichtet ist und mit der wenigstens eine der Muttern auf der von den Schlaufen abgewandten Seite in Anschlag zu gelangen geeignet ist.

## Claims

1. A clamping device for coupling together in leaktight manner two smooth tubes that are disposed end-to-end, the device comprising a sealing ring (10) that is suitable for clamping around the facing ends of the two tubes, and that has first and second free ends (10A, 10B), each of which is provided with a sealing arrangement (11A, 11'A, 11B, 11'B, 11C, 11'C), the sealing arrangements being designed to procure leaktight contact between said free ends when the ring (10) is in a tightened state, the device further comprising first and second tightening lugs (12, 112; 14, 114) suitable for being moved relative to each other in order to bring the ring into the tightened state;
said device being **characterized in that** the first and second tightening lugs (12, 112; 14, 114) are fastened to the sealing ring (10), respectively in the vicinity of the first free end (10A) of said ring and in the vicinity of the second free end (10B) of said ring, and **in that** the device has a bridge (20) covering the sealing arrangements (11A, 11'A, 11B, 11'B, 11C, 11'C), the bridge being mounted to be stationary relative to the first free end (10A) of the ring (10) and suitable for sliding relative to the second free end (10B) while the ring is being tightened.

2. A device according to claim 1, **characterized in that** the sealing arrangements of the first and second free ends (10A, 10B) of the sealing ring (10) respectively comprise at least one tongue (11B, 11'B) and at least one notch (11A, 11'A), tightening the ring causing the tongue to penetrate into the notch and causing the contact zones between the tongue and the notch to deform.

3. A device according to claim 1 or claim 2, **characterized in that** with the lugs (12, 14, 112, 114) and the ring (10) being formed from strips of metal, the strip from which the ring is formed has a thickness (e) lying in the range 30% of the thickness (E) of the strips from which the lugs are formed to 80% of said thickness (E) of the strips from which the lugs are formed, preferably in the range 40% to 60% of said thickness (E) of the strips from which the lugs (12, 14, 112, 114) are formed.

4. A device according to claim 3, **characterized in that** the bridge (20) is also made from a strip of metal, of thickness (e) substantially equal to the thickness (e) of the strip from which the ring (10) is made.

5. A device according to any one of claims 1 to 4, **characterized in that** the lugs (12, 112; 14, 114) are formed from strip portions (22, 122; 24, 124) that are fastened to the ring (10), each of which strip portions covers said ring over an angular sector lying in the range 10° to 50°, and preferably in the range 25° to 35°.

6. A device according to claim 5, **characterized in that** the strip portions (22, 122, 24, 124) from which the lugs (12, 112; 14, 114) are formed have stamped-out portions or ribs (44, 48) that are designed to reinforce the rigidity of said strip portions.

7. A device according to claim 5 or claim 6, **characterized in that** the strip potions (22, 24; 122, 124) from which the lugs (12, 14; 112, 114) are formed are fastened to the ring in zones of the ring that form indents (10D) in the inside face of the ring (10).

8. A device according to any one of claims 5 to 7, **characterized in that** at least one of the tightening lugs (12, 14, 112, 114) firstly has a tightening wall (40) that is formed by a turned-out segment of the strip portion (22, 24, 122, 124) from which said lug is formed, which turned-out segment is configured to retain tightening means, and secondly has a loop (46) having an end (46A) that is folded back between said strip portion and the ring (10).

9. A device according to claim 8, **characterized in that**, when the device is in the non-tightened state, a portion of the inside face of the end (46A) of the loop (46) forms radial extra thickness extending inwards relative to the main inside surface (22") of the strip portion (22), while, when the device is in the tightened state, said extra thickness is reabsorbed.

10. A device according to claim 8, **characterized in that** one of the elements constituted by the inside face of the band strip (22, 24, 122, 124) and by the outside face of the end (46A) of the loop (46) has at least one bearing projection (50) that co-operates with the other of said elements.

11. A device according to any one of claims 1 to 10, **characterized in that** it has means (36, 36', 38, 38') for guiding the sliding of the bridge (20) relative to the second free end (10B) of the ring (10).

12. A device according to claim 11, **characterized in that**, in the vicinity of the second free end (10B), the edges of the ring (10) are provided with tabs (36, 36') that co-operate with the edges of the bridge (20).

13. A device according to any one of claims 1 to 12, **characterized in that** it has at least one pair of first tightening lugs (12, 112) and one pair of second tightening lugs (14, 114) situated facing each other, the second lugs being formed in two strip portions (24, 124) that are fastened to the ring with a gap (125) between them, and **in that** the bridge (20) has a guide tab (32) that extends in said gap.

14. A device according to any one of claims 1 to 13, **characterized in that** it has at least one pair of first tightening lugs (12, 112) and at least one pair of second tightening lugs (14, 114) situated facing each other, and two nut-and-bolt assemblies (16, 116) that co-operate with said pairs of first and second lugs, and **in that** it is provided with means (30) for limiting longitudinal movement of one of the nut-and-bolt assemblies (16, 116) while the other nut-and-bolt assembly is being tightened.

15. A device according to claim 14, **characterized in that** with the nuts (16A, 116A) being designed to be retained by the lugs (12, 112) of one of the pairs, said lugs are formed from two strip portions (22, 122) fastened to the ring with a gap (123) between them, and **in that** the bridge (20) has a retaining tab (30) that is turned out in said gap (123) and with which at least one of the nuts is suitable to come into abutment on the side remote from the lugs.
